(19)

Europäisches
Patentamt
European
Patent Office
Office européen
des brevets

(11)  **EP 1 751 336 B1**

(12)  **EUROPEAN PATENT SPECIFICATION**

(45) Date of publication and mention
of the grant of the patent:
**19.10.2016 Bulletin 2016/42**

(51) Int Cl.:
***D04B 21/12*** *(2006.01)*     *D04B 27/36* *(2006.01)*

(21) Application number: **05739662.4**

(86) International application number:
**PCT/FI2005/050150**

(22) Date of filing: **10.05.2005**

(87) International publication number:
**WO 2005/108663 (17.11.2005 Gazette 2005/46)**

(54) **METHOD AND APPARATUS FOR TREATING A BINDING NET, AND A BINDING NET**

VERFAHREN UND VORRICHTUNG ZUR BEHANDLUNG EINES BINDENETZES SOWIE
BINDENETZ

PROCEDE ET DISPOSITIF DE FABRICATION DE FILETS D'EMBALLAGE, ET FILET D'EMBALLAGE

(84) Designated Contracting States:
**AT BE BG CH CY CZ DE DK EE ES FI FR GB GR
HU IE IS IT LI LT LU MC NL PL PT RO SE SI SK TR**

(30) Priority: **11.05.2004  FI 20040669
09.07.2004  FI 20040968**

(43) Date of publication of application:
**14.02.2007  Bulletin 2007/07**

(73) Proprietor: **PIIPPO OY
83500 Outokumpu (FI)**

(72) Inventor: **HYTTINEN, Kimmo
FI-83835 Ruvaslahti (FI)**

(74) Representative: **Kolster Oy Ab
Iso Roobertinkatu 23
PO Box 148
00121 Helsinki (FI)**

(56) References cited:
**EP-A2- 0 919 655      EP-A2- 1 215 327
WO-A-2005/083167    GB-A- 1 140 030
US-A- 1 716 555       US-A- 4 087 226
US-A- 5 104 714**

Remarks:
The file contains technical information submitted after
the application was filed and not included in this
specification

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

Printed by Jouve, 75001 PARIS (FR)

**Description**

BACKGROUND OF THE INVENTION

The invention relates to a method for treating a binding net comprising warp threads and weft threads. An important application of the invention is a method for manufacturing a binding net roll by means of a knitting apparatus.
The invention also relates to an apparatus for treating a binding net comprising warp threads and weft threads, the apparatus comprising a winding unit for winding the binding net into a binding net roll. An important application of the invention is a knitting apparatus.
The invention further relates to a knitted binding net comprising warp threads and slack weft threads.
Binding net rolls are used for binding goods, and particularly for binding bulk goods. The goods may include agricultural crops, such as hay and soilage. In the latter case, the crops are often packed in a cylindrical form referred to as a round bale, in which the crops are bound with a binding net to facilitate transportation and storage. The goods may also include pallet goods that is to be bound in various shapes for transportation and storage.
It is an aim of the binding net to bind the material to be baled tightly and strongly, thus enabling the preservation and transportation of the goods to be baled. The oxidation of tightly bound goods, which are possibly also wrapped in a plastic film, is insignificant, thus improving the preservability of the goods.
In general, binding nets are made into Raschel nets by means of what is known as the Raschel method. The material of such a net is typically polyolefin fibre. The apparatus required for manufacturing a Raschel net includes an extrusion film line for manufacturing a polyolefin film and a knitting apparatus for manufacturing the binding net. However, the present invention is not restricted to the Raschel method, the Raschel machine, and the Raschel net, but relates more generally to the manufacturing methods and machines of nets and to nets.
The final winding width of a binding net into a roll to be manufactured by a knitting apparatus is determined in accordance with the distances between the warp needles in the knitting machine, the number of used warp threads, the operating parameters of the knitting apparatus to be employed, and the technical properties of the warp and weft threads to be used in the binding net. A typical feature of a binding net is that it shrinks, or tapers, between the knitting and winding units.
The shrinking of the net has proven to be a problem, as it restricts the size of the goods to be bound inside the binding net. The idea is to be able to enclose goods which are as wide/large as possible with the binding net to be manufactured with the available knitting machines. Especially when large-sized goods are to be bound with a binding net obtained from a conventional binding net roll, there is a risk that the goods will not be very tightly bound, but remain partly unbound, which results in shedding, thus causing shedding losses. In addition, if the goods are poorly bound, the handling thereof becomes more difficult, the preservability becomes poorer, and the costs increase in applications where a bracing film is used, since more bracing film has to be used in comparison with well-bound goods.
In order to eliminate the above problem, a method and a knitting machine for manufacturing a binding net is known from patent publication EP 0,919,655 B1, in which the weft threads of the binding net are slack in a strain-free state. It is therefore possible to use the method and the knitting machine for manufacturing a binding net roll, where the binding net unwound from the binding net roll is capable of expanding when it is used for binding goods. The solution presented in the publication requires that significant and laborious changes are made to the knitting beam system of the knitting machine (several protrusions are made between the warp needles, the installation of the knitting beam system is difficult, etc.). Consequently conventional knitting beam systems offered by the manufacturers of knitting machines cannot be used directly.
In conventional binding nets made of polyolefin, the ultimate tensile strain is typically about 30% or less. One desired property of known binding nets made of polyolefin is that the threads do not break when used. Therefore, a high ultimate tensile strain is a desirable feature in the threads.

BRIEF DESCRIPTION OF THE INVENTION

It is an object of the invention to provide a new and easily implemented method for treating a binding net, the method enabling to provide a binding net that is capable of expanding considerably.
It is a further object of the invention to provide a new and easily implemented apparatus for implementing the method according to the invention, i.e. an apparatus for treating a binding net.
In order to achieve the above objects, the method according to the invention for treating a binding net is characterized in that the binding net is put in motion and guided to be in contact with rotating circular stretching elements of stretching means, the stretching elements being arranged on a shaft, adjacent to one another in the longitudinal direction of the shaft, and the number thereof corresponding to the number of the warp threads of the binding net reduced by at least one, whereby at least one warp thread is guided into a groove provided between two adjacent stretching elements, the binding net is kept in contact with the circumferences of the stretching elements at a sector angle of at least 20 degrees while the binding net is moving over the stretching elements, the weft threads of the binding net are plastically stretched at least 3 % using the circular stretching elements by keeping the binding net within the influence of tensile stress viewed from the direction of motion of the binding net, and the binding net is wound into a binding net roll.

Thus, in the method according to the invention for treating a binding net roll, the plastic and final stretching of the wefts is not carried out until what is known as the final structure of the binding net is formed and the net structure is completed.

In an arrangement of the type mentioned above, the stretching means may be simple, without having to employ for instance stretching shafts placed opposite to one another, and the stretching elements thereof intermeshing with one another.

Preferably the number of stretching elements is at least half of the number of warp threads of the binding net to be treated. This enables the treatment of the binding net that provides the binding net with a significant ability to expand.

The stretching extends the length of the wefts for instance by 5 to 20%, whereby the length of the wefts increases 5 to 20% compared with the length thereof in the binding net when it is on the knitting beam system and when the structure of the binding net is being formed. The stretching affects the mechanical properties of the wefts, such as the ultimate tensile strength and the ultimate tensile strain. In this method, the warp threads are not similarly stretched; instead it could be said that they are in a substantially non-stretched state, and the mechanical properties thereof are not modified during the treatment.

It is highly recommended that the method should be implemented immediately when the binding net is being manufactured, in which case the conventional knitting beam systems of the knitting machines can be utilized without having to make any significant changes to the knitting machines of the type currently in use. The weft strips are pre-oriented using an I.S.O. unit before the net structure is formed on the knitting beam system.

When the binding net is stretched using the knitting apparatus, the stretching of the wefts is arranged at a point of the knitting apparatus, where it is easy and economically advantageous to arrange and where the binding net is structurally completed. The wefts are preferably stretched in a take up unit or at a point between the take up unit that removes the binding net from the knitting beam system and the winding unit that winds the finished binding net into a roll. At this point, the stretching is technically easy to carry out, since the means required for stretching are easy to install at said point. However, the stretching point may be different from the one mentioned and be basically anywhere in the knitting apparatus except on the knitting beam system, as this would require difficult technical arrangements and the chances for malfunctions would increase.

The wefts are preferably stretched on the last shaft of the take up unit of the knitting apparatus, where stretching discs are preferably arranged. When the binding net, whose weft threads are tightly placed between the warp threads, is driven on the stretching discs, the weft threads of the binding net stretch plastically.

After the take up unit, the binding net is wound into a binding net roll by keeping the distance between the warp threads substantially equal to the distance they have on the knitting beam system and by keeping the weft threads in an unstrained, but plastically stretched state.

The preferred embodiments of the method according to the invention are disclosed in the accompanying claims 2 to 9.

The most significant advantage of the method according to the invention is that it enables to easily provide a binding net that is capable of expanding considerably using simple means, and the binding net enables to tightly bind the material to be packed.

The total width of the binding net when unwound from the binding net roll can be made significantly larger than what is conventional. The invention enables to very easily manufacture a binding net capable of expanding without having to make changes to conventional knitting machines, whereby the most important mechanical parts of the knitting beam system are not strained more than usual and no more malfunctions are observed during knitting than usual. The invention enables the use of different operating parameters in the knitting machine, which have not been possible for the structure of the binding net roll, such as the width, while the number of warp threads remains the same or varies.

The invention allows avoiding a significant shrinkage of the binding net that normally occurs between the take up unit and the winding unit. The reduction in shrinkage permits a more extensive use of the operating parameters related to the width of the binding net than what is possible in a conventional manufacturing process of the net.

The method according to the invention for manufacturing a binding net roll allows decreasing the number of warp and weft threads in the binding net structure, since it reduces shrinkage. The insignificant decrease in the strength of the binding net owing to the reduction of the number of warp and weft threads is easily compensated by using slightly stronger warp and weft threads. The strength of the binding net remains the same, but the strength of individual threads is higher than usual. During the knitting phase of the binding net, fewer warp threads can be used for the desired width of the binding net roll than what the specific operating parameters of the knitting machine would permit, resulting in a binding net that is capable of better covering the goods to be bound than known binding nets.

The apparatus according to the invention for treating a binding net is characterized by comprising stretching means for plastically stretching the weft threads of the binding net at least 3 %, the stretching means comprising rotatable circular stretching elements arranged on a shaft, adjacent to one another in the longitudinal direction of the shaft, and the number thereof corresponding to the number of the warp threads of the binding net reduced by at least one, and by the apparatus being arranged to direct the binding net to come in contact with the circumferences of the stretching elements at the sector angle of at least 20 degrees. Another apparatus not designed for plastically strectching well threads is known from WO 2005/083167 A1.

The stretching means in said apparatus may be simple without having to use for instance stretching shafts placed opposite to one another and stretching elements thereof intermeshing with one another.

Preferably the number of stretching elements is at least half of the number of warp threads. This allows a treatment that provides the binding net with a significant ability to expand.

The stretching elements are preferably arranged along most of the width of the binding net and thus also on most of the weft threads in the binding net.

The stretching means are preferably arranged on the shaft of the pulling device (take up unit) of the knitting apparatus. The shaft may be referred to as a roller or a reel. The shaft in question is preferably the last shaft of the pulling device.

Preferably the surfaces of the stretching elements comprise protrusions and recesses that form a serrated surface and may be referred to as a stretching surface or a gripping surface. In this context, the term 'protrusion' refers to any protrusion, ridge or the like; and the term 'recess' refers to any groove, pocket or the like. The protrusions allow the weft threads of the binding net to adhere to the stretching elements so as to stretch them when they are pulled up on the stretching elements and conveyed thereon.

The number of stretching elements preferably corresponds to the number of warp threads reduced at least by one. Thus, the number of stretching elements may typically range between 46 and 52 for one binding net roll to be manufactured when the width of the binding net roll ranges between 1.23 and 1.30 m.

The circular elements are preferably discoidal elements provided with a cross-section that tapers towards the outer circumference and the outer circumference thereof is rounded. In practice, such a form has proven to be good, meaning that stretching the weft thread does not cause any problems.

The weft threads may be stretched at room temperature, but it is also possible that the weft threads are stretched when heated.

The preferred embodiments of the apparatus according to the invention are disclosed in the accompanying claims 11 to 21.

The most significant advantage of the apparatus according to the invention is that it enables to easily manufacture a binding net that is capable of expanding, which in turn makes it possible to provide a tight bale, for example.

The invention enables to easily manufacture a binding net that is capable of expanding without having to carry out any changes to the knitting beam system of the knitting machine. Owing to the fact that complex changes do not have to be carried out in the knitting apparatus, whereby the most important mechanical parts of the knitting beam system are not strained more than usual and no more malfunctions occur during knitting than usual. In practice, the operating parameters of the knitting apparatus may be more freely selected than in conventional knitting apparatuses.

As an object to improve the strength of a knitted binding net made of polyolefin against breaking, the binding net according to the invention is characterized in that the knitted binding net is made of HD polyethylene and in that at least 5% and preferably at least 50% of the weft threads are in a plastically stretched state, in which the plastic elongation is at least 3%, preferably at least 5%. Preferably the warp threads of the binding net are plastically substantially in a non-stretched state.

BRIEF DESCRIPTION OF THE DRAWINGS

In the following the invention will be explained in greater detail by means of two preferred embodiments and in comparison with the prior art and with reference to the accompanying drawing, in which

Figures 1 and 2 illustrate a currently used conventional knitting apparatus and a method for manufacturing a binding net roll,

Figures 3 and 4 illustrate a knitting apparatus and a method according to the invention for manufacturing a binding net roll,

Figure 5 shows the structure of a conventionally manufactured binding roll,

Figure 6 shows the structure of a binding net manufactured in accordance with the invention,

Figure 7 shows a bale achieved using a conventional binding net,

Figure 8 shows a bale achieved using a binding net made by means of the method and the knitting apparatus according to the invention,

Figure 9 shows a stretching disc of the knitting apparatus shown in Figure 3 for plastically stretching the length of the weft thread of the binding net,

Figure 10 shows the stretching disc shown in Figure 9 disassembled and seen in the direction of arrows A in Figure 10, Figure 11 illustrates the stretching shaft shown in Figures 3 and 4 comprising the stretching discs of Figure 9, and Figure 12 illustrates a second embodiment of the invention.

## DETAILED DESCRIPTION OF THE INVENTION

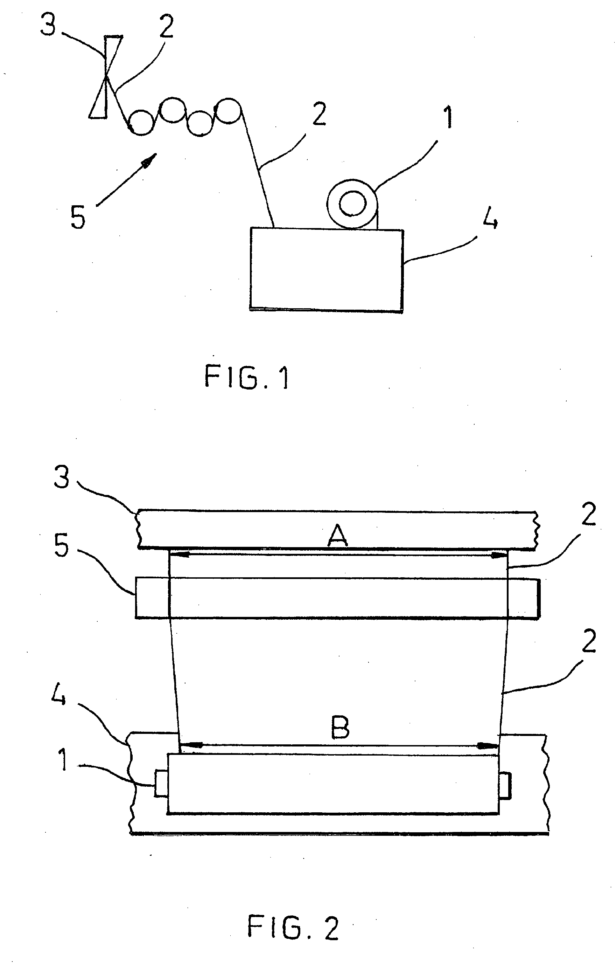

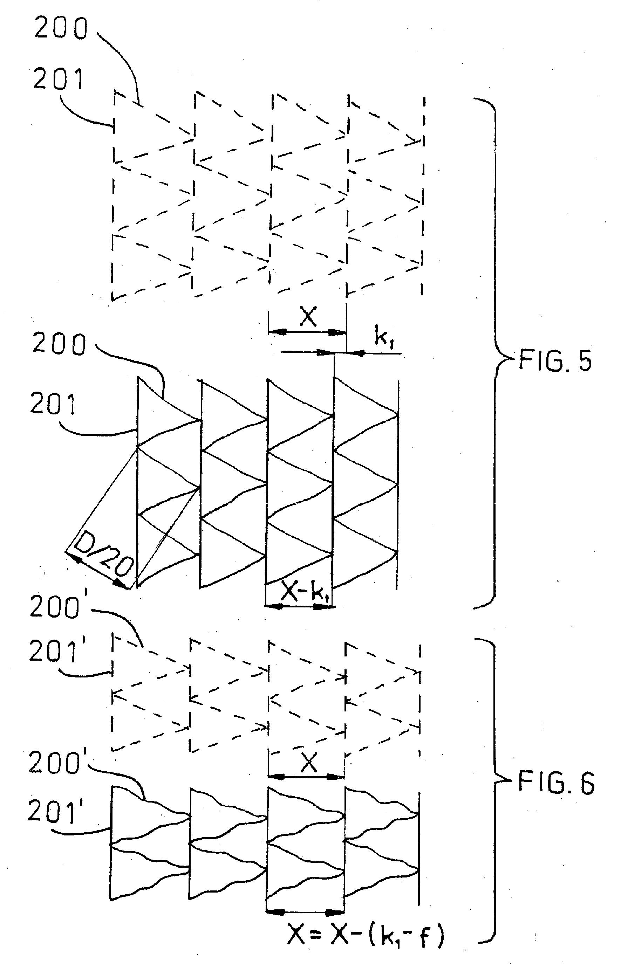

Figures 1 and 2 illustrate a known and generally used knitting apparatus and a method for manufacturing a binding net roll 1 from different angles. The Figures show how a binding net 2 is manufactured from a knitting beam system 3 (also referred to as a weaving beam system) of a knitting machine in the knitting apparatus to a winding unit 4 of the binding net roll 1. When manufacturing the binding net 2, fibre-like warp and weft threads/strips made of polyolefin or similar material, also referred to as warp or weft fibres, are knitted into a binding net 2 on the knitting beam system 3. Figure 5 illustrates the binding net 2. The distance typically used on the knitting beam system 3 between the warp threads is 1 inch, i.e. 25.4 mm. Other distances are also possible. The finished binding net 2 is pulled from the knitting beam system 3 with a pulling device 5, often also referred to as a take up unit. The binding net 2 is transferred in a state, in which the weft threads thereof are substantially in an unstrained state, from the pulling device 5 to the winding unit 4, in which the binding net is wound into a binding net roll 1. What is basically meant by the weft threads being in an unstrained state is that they are more or less slack.

The width B of the binding net roll 1 is determined in accordance with the technical properties of the threads of the binding net roll 1, the distances between the warp needles of the knitting machine, the number of warp threads employed and the operating parameters of the knitting machine. The operating parameters of the knitting machine include controlling (ELA 2) the length of the weft threads used between the warp thread knots indicating how many millimetres of weft thread are used for 480 warp stitches, controlling (ELA 1) the length of the warp thread in millimetres for 480 warp stitches, the number of warp thread stitches per centimetre (EWA), and controlling (AUFR) the winding tightness of the binding net roll of the winding unit 4 indicating the relationship between the winding unit and the pulling device 5. The back-and-forth sidewise movement, or oscillation, of the binding net when wound on the winding unit also slightly affects the width of the binding net roll. The wider the oscillation of the binding net is, the wider the binding net roll becomes. Oscillation affects the width of the binding net roll only by a few percent.

An example is next shown presenting the properties of a 1.23 meter wide conventional binding net roll 1, the operating parameters of the knitting machine, the width A of the binding net 2 on the knitting beam system 3, the width B of the binding net on the winding unit 4 and when wound, as well as the shrinkage C (in percent) of the binding net and the length D of the weft after the knitting beam system 3. The accompanying Figure 5, denoted with D/20, shows what is meant by the length D of the weft in the following example (i.e. the length of the weft 200 between two adjacent warp threads multiplied by twenty).

| Property / Operating parameter of knitting apparatus | Conventional net |
|---|---|
| Material of warps and wefts | HD polyethylene HOSTALEN® GF 7740 F2 |
| Number of warps | 52 |
| ELA 1 (describes warp length) | 14,000 |
| ELA $2_1$ (describes weft length) | 7,790 |
| EWA (number of warp stitches per cm) | 1.15 |
| AUFR (winding tightness) | 0.95 |
| Weft stretching ratio before knitting | 1:5.25 |
| Width A of binding net on knitting beam system 3 | 1,290 mm |
| Width B of binding net on winding unit 4 | 1,211 mm |
| Shrinkage% C (= (A-B) x 100/A) | 6.12% |
| Length of weft* D/20 after knitting beam system 3 (cf. Figure 5) | 62 mm |
| Ultimate tensile strain of weft | 31 % |

\* Length measured as an average value of twenty consecutive wefts.

In a conventional binding net, A is greater than B.

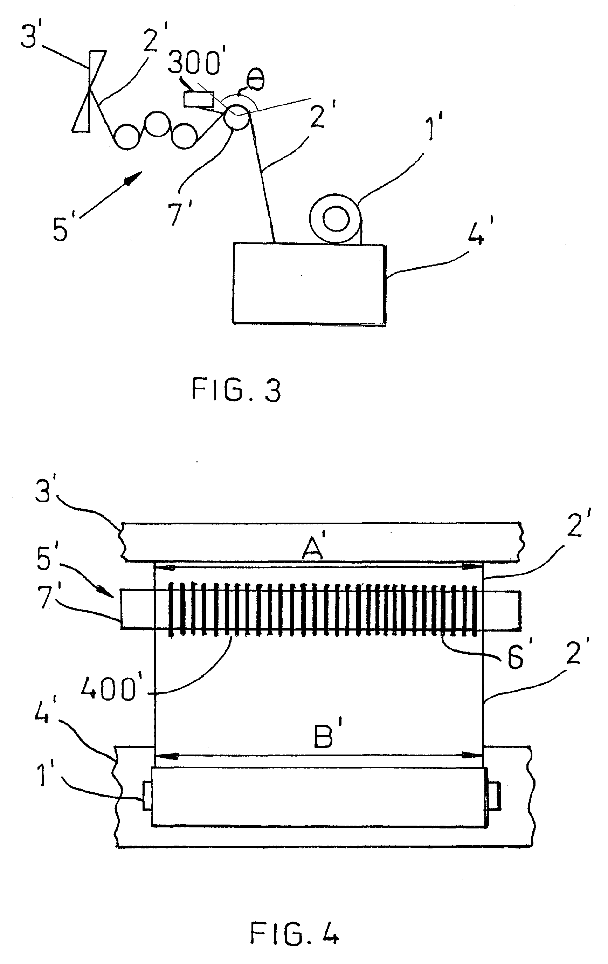

Figures 3 and 4 illustrate the knitting apparatus and the method according to the invention for manufacturing a binding net roll 1' from different angles. The same reference numerals are used in Figures 3 and 4 as in Figures 1 and 2 for corresponding parts.

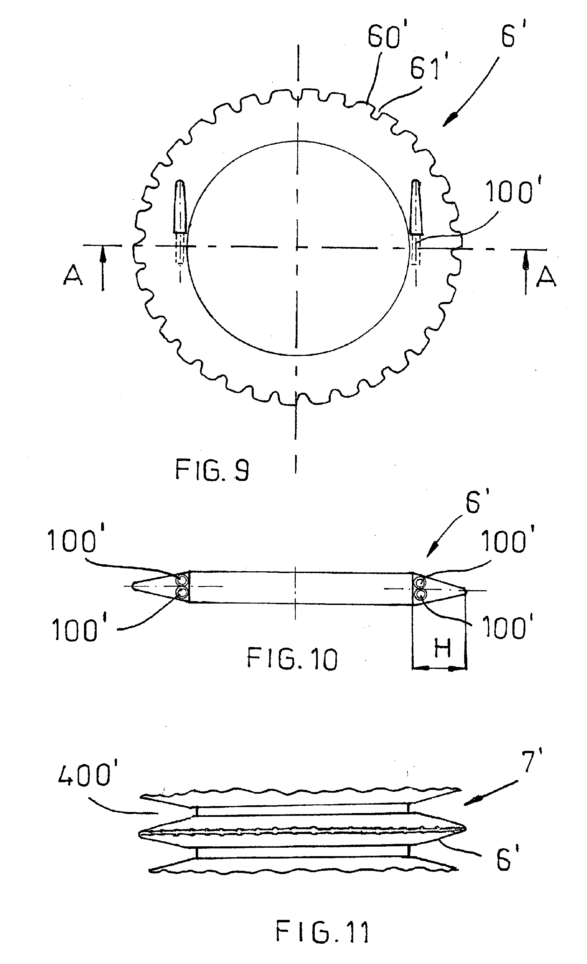

Manufacturing the binding net roll 1' differs from the manufacturing process shown in Figures 1 and 2 in that the last roller in the take up unit 5' of the knitting apparatus of Figures 3 and 4 is made into a stretching shaft 7' by arranging circular stretching elements shaped as stretching discs 6' thereto (cf. Figures 9 to 11). Arranging the stretching discs 6' at this particular point of the knitting apparatus is particularly advantageous, since such an arrangement is technically very easy to arrange even afterwards in a prior-art knitting apparatus. At said point, the stretching discs 6' do not either take up space in the knitting machine.

In Figure 3 the binding net 2' moves on the stretching shaft 7' over the circumferences of the stretching discs 6' (cf. Figure 4) so that the binding net comes in contact with the circumferences of the discoidal elements for a sector angle θ = 130 degrees. The angle θ must be at least 20 degrees and preferably over 30 degrees, because otherwise the stretching discs 6' will not provide the weft threads with the desired stretching without special arrangements (such as a counter shaft provided with stretching discs intermeshing with the stretching discs 6' of the stretching shaft 7'). Most preferably the angle θ ranges between 60 and 150 degrees. In practice, the angle θ is about 180 degrees at the most. The size of the angle θ depends on several parameters and particularly on the diameter of the stretching disc 6'.

The stretching discs 6' lift the wefts of the binding net on the move and while being stretched up from the surface of the take up unit, in other words up from a groove 400' illustrated in Figure 4 while simultaneously stretching the length of the wefts from the original. The stretching shaft 7' stretches the wefts of the binding net between the warps longer than what could normally be possible to manufacture (i.e. without the stretching discs) by means of the operating parameters of the knitting machine. The plastic elongation of the weft threads ranges for instance within 5 and 10%, or within a larger area, for instance within 3 and 20%, 5 and 20 % or 3 and 40 %. The smaller the plastic elongation is, the smaller the ability of the network to expand becomes. If the plastic elongation is significant, there is a risk that the warp threads break. The binding net 2' is guided from the stretching shaft 7' to the winding unit 4' to be wound. Immediately after the stretching shaft 7', the wefts are in an unstrained but plastically stretched state and the normal shrinkage C does not occur, but the net winds into a net roll 1' with a shrinkage C' of nearly 0%. However, it has been noted that the wefts of the binding net on the net roll are shortened by themselves on account of relaxation, when the net roll has remained stationary several hours or days after the winding. The shortening is quite insignificant; for instance, wefts with a permanent stretch of 12% may shorten so that the permanent stretch is 9%. The temperature also affects the rate and magnitude of the relaxation.

The manufacturing method according to the invention shown in Figures 3 and 4 may also differ from the method shown in Figures 1 and 2 in that the number of weft threads is preferably 1 to 5 smaller and in that the stretch ratio of the weft before knitting is preferably at least 10% smaller.

Next, an example is shown presenting the properties of a 1.23 meter wide binding net roll 1', the operating parameters of the knitting machine, the width A' of the binding net 2' on the knitting beam system 3', the width B' of the binding net on the winding unit 4' and wound, and the shrinkage C' (in percent) of the binding net, and the length Da' of the weft immediately after the knitting beam system 3', the length Db' of the weft after the stretching shaft 7', the difference E' in weft length, and the elongation F' (in percent) caused by the stretching shaft 7' of the weft.

| Property / Operating parameter of knitting apparatus | Net made according to the invention |
|---|---|
| Material of warps and wefts | HD polyethylene HOSTALEN@ GF 7740 F2 |
| Number of warps | 50 |
| ELA 1 (describes warp length) | 15,900 |
| ELA $2_1$ (describes weft length) | 8,600 |
| EWA (number of warp stitches per cm) | 1.00 |
| AUFR (winding tightness) | 0.84 |
| Weft stretching ratio before knitting | 1:3.5 |
| Width A' of binding net 2' on knitting beam system 3' | 1,240 mm |
| Width B' of binding net 2' on winding unit 4' | 1,213 mm |
| Shrinkage% C' (= (A'-B') x 100/A') | 2.18% |
| Length of weft* Da'/20 immediately after knitting beam system 3' | 67 mm |
| Length of weft* Db'/20 after stretching shaft 7' | 74 mm |
| Difference in weft length E'=(Db' Da') | 7 mm |
| Weft elongation% | $F' = \dfrac{(Db'-Da')}{Da'} \times 100$ |
| Ultimate tensile strain of weft | 114% |

\* Length measured as an average value of twenty consecutive wefts.

When comparing the above examples, it can be seen that the conventional shrinkage of the binding net is almost eliminated in the method according to the invention. On this account the binding net, which is unwound from the binding net roll manufactured using the method and knitting apparatus according to the invention, is provided with an ability to expand extensively. The latter feature and advantages thereof are described below.

Figure 5 shows a binding net 2 manufactured by means of a conventional method, in which the wefts 200 rest tightly between the warps 201 after knitting and when the binding net is wound into a roll. The binding net indicated with a dashed line illustrates the binding net on the knitting beam system. The Figure shows that the width of the binding net and the distance X between the warp threads is greater by $k_1$ on the knitting beam system than at the location where the binding net is wound into a roll. In Figure 5, $k_1$ illustrates the conventional shrinkage of the binding net between the knitting beam system and the winding unit.

In the example shown above, the weft threads are stretched when the weft threads are at room temperature, in other words when the weft threads are 'cold'. It is conceivable to stretch the weft threads heated, for instance at a temperature ranging from 50 to 80°C (or at a wider range from 40 to 100°C). The heating provides such an advantage that plastic elongation is very easily achievable and with an insignificant amount of force. A disadvantage of such a heating is naturally that the heating requires heaters. The heating is preferably only aimed at the weft threads 200'. This can be implemented by heating the stretching discs 6' on the stretching shaft preferably using electricity, in which case the frame of the stretching shaft is not heated. The stretching discs 6' may be insulated from the frame of the stretching shaft, on which they are mounted. It is possible that the heating of the weft threads renders the rotatable stretching means unnecessary, in which case it can be replaced with a fixed stretching means provided with fixed stretching elements. Reference numeral 300' shows the heating means.

Figure 6 shows a binding net 2' manufactured by means of the method according to the invention. The distance X between the weft threads 201' on the knitting beam system 3 corresponds to that shown in Figure 5 (cf. Figures 6 and 5 indicated with a dashed line), but when winding the binding net into a roll, the (theoretical) distance between the weft threads is X-($k_1$-f), where f denotes the reduction in shrinkage and is smaller than or equal to $k_1$. In the invention, f is greater than 0. In Figure 6, the wefts are slack and unstrained, whereas in the case shown in Figure 5, they are tight. The loosening of the weft threads shown in Figure 6 is caused by the stretching shaft 7', cf. Figure 4. In Figure 6, the wefts 201' are tight between the warps 200' after knitting until the stretching shaft 7' that stretches the wefts, whereafter the wefts of the binding net are stretched to achieve the desired weft length.

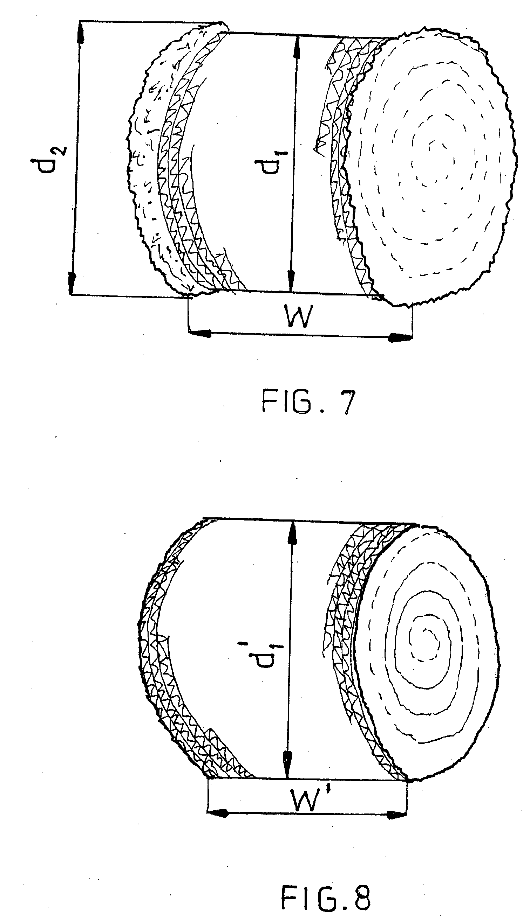

Figure 7 shows a round bale obtained with a conventional binding net, and Figure 8 shows a round bale obtained with the binding net manufactured with the method and knitting apparatus of the invention. When comparing Figure 8 with Figure 7, it can be seen that the diameters in the middle of the round bales are the same, i.e. $d_1 = d_1'$, but the diameter of the round bale of Figure 7 is $d_2$ on the edges, whereas in the round bale of Figure 8, it is $d_1'$. Diameter $d_2$ is larger than diameter $d_1'$, as the binding net has not expanded enough in Figure 7 to cover the edge sections of the round bale. The length W of the round bales in Figures 7 and 8 is the same, i.e. W=W'.

Figure 9 shows a more detailed description of the stretching disc 6' on the stretching shaft 7' in Figures 3 and 4, by which the length of the wefts of the binding net can be increased. The stretching shaft 7' of the knitting apparatus in Figures 3 and 4 is provided with several stretching discs 6' placed adjacent to one another, cf. Figures 11 and 4. The number of stretching discs 6' corresponds to the number of warp threads reduced by at least one, and the stretching discs are mounted at the midpoint of the weft threads running between the warp threads. The number of stretching discs 6' should be at least half of the number of warp threads of the binding net, because otherwise the binding net cannot be provided with the desired ability to expand. If the number of stretching discs 6' is only half of the number of warp threads of the binding net, then two warp threads on average are placed between the two adjacent stretching discs 6'.

The stretching discs 6' are formed so as to be triangular in cross-section. A triangular shape, or any other shape tapering towards the outer circumference, is easily guided into the weft openings of the binding net. The circumference, i.e. point, of the stretching discs is rounded (so as not to cut the weft threads) and formed to be wavelike in the direction of rotation of the stretching disc, thus improving the attachment of the weft threads to the outer circumference of the stretching disc in what is known as a recess of the stretching disc, cf. Figure 10 illustrating the cross-section of the stretching disc 6', even though the Figure does not actually show the cross-section. The wavelike shape means that the outer circumference of the stretching disc comprises projections/protrusions/ridges 60' as well as grooves/recesses/pockets 61' forming a pattern that resembles a cogwheel. The number of ridges 60' and pockets 61' is preferably 10 to 150, for instance approximately 60. The greater the diameter of the stretching disc 6' is, the greater the number of ridges 60' also typically becomes.

In general, the longer the weft thread is to be, the greater the height H of the cross-section of the stretching disc is, and the distance the weft travels on the circumference of the shaft therefore becomes longer in relation to the distance the warp travels. The stretching effect is thus based on the difference in the height of the cross-section and the difference in the distance travelled by the warp and weft threads on the circumference of the shaft. In an exemplary case, the height H of the cross-section of the disc is 16 mm and the outer diameter of the stretching disc 6' is approximately 150 mm. Naturally the size of the diameter may vary, but preferably the size thereof is the diameter of the stretching shaft 7' increased by 10 to 30 mm. Broadly estimated, the latter dimension may vary between 10 and 60 mm. The diameter is for instance 100 to 200 mm.

Figures 10 and 11 show that the stretching discs 6' are made up of two parts formed of two semi-circle circumferential parts fastened together with screws 100' or similar fastening means. Such stretching discs 6' can easily be detachably fastened to the shaft.

The stretching discs 6' are preferably made of aluminium or some other metal.

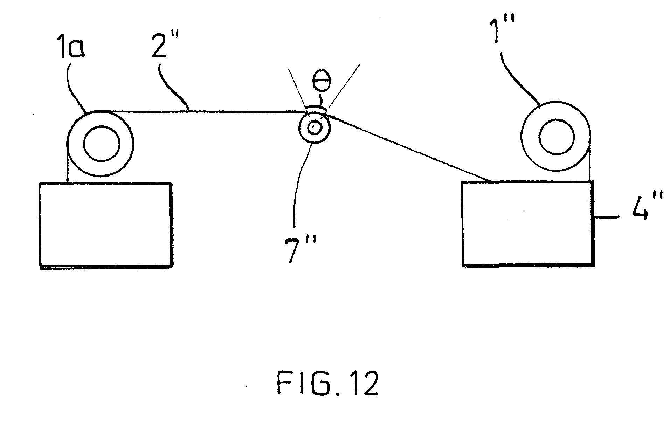

Figure 12 illustrates an arrangement for treating a binding net 2" comprising warp threads and weft threads. Reference numeral 1 a shows a net roll, in which the binding net is not capable of expanding (cf. Figure 5, lower Figure). Reference numeral 7" shows the stretching shaft 7' of Figures 3 and 4. Reference numeral 4" shows a winding unit, in which the plastically stretched binding net is wound into a net roll. The arrangement shown in Figure 12 differs from the arrangement shown in Figures 3 and 4 in that the binding net is stretched separately from the knitting apparatus.

The invention has above been described with examples and it is therefore noted that the details of the invention may be implemented in various ways within the scope of the accompanying claims. Consequently, the exact location of the stretching means may vary. It is therefore conceivable that the stretching shaft and the stretching discs thereof are arranged between the pulling device and the winding unit. It is also possible that the stretching means are located in the winding unit. The structure and design of the stretching means may also vary. It is therefore conceivable that instead of the "serrated" metal discs or other circular stretching means, stretching means made of metal or other materials are used, and the surface thereof is roughened such that the warp threads are able to engage thereto for stretching. What can also be used are stretching wheels made of elastomeric material. The surface of a stretching wheel made of elastomeric material does not have to be roughened, since the high friction of the elastomeric material enhances the engagement of the weft threads to the stretching wheel even though the surface is smooth and even. However, a metallic serrated stretching means is to be recommended owing to the strength and reliability thereof. The number of stretching means for a binding net to be manufactured may vary from 20 to 70 covering all practical needs. If the width of the binding net is significant the number of stretching elements may range from 70 to 140. The stretching elements can be made of the same piece as the stretching shaft.

## Claims

1. A method for treating a binding net (2', 2") comprising warp threads (201') and weft threads (200'), **characterized in that** the binding net (2', 2") is put in motion and guided to be in contact with rotating circular stretching elements (6') of stretching means (7', 7"), the stretching elements being arranged on a shaft, adjacent to one another in the longitudinal direction of the shaft, and the number thereof corresponding to the number of the warp threads (201') of the binding net reduced by at least one, whereby at least one warp thread (201') is guided into a groove (400') provided between two adjacent stretching elements (6'), the binding net (2') is kept in contact with the circumferences of the stretching elements (6') at a sector angle ($\theta$) of at least 20 degrees while the binding net is moving over the stretching elements (6'), the weft threads (200') of the binding net are plastically stretched at least 3 % using the circular stretching elements (6') by keeping the binding net within the influence of tensile stress viewed from the direction of motion of the binding net, and the binding net (2', 2") is wound into a binding net roll (1', 1 ").

2. A method as claimed in claim 1, **characterized in that** the number of stretching elements (6') is at least half of the number of warp threads (201').

3. A method as claimed in claim 1, **characterized in that** the binding net (2', 2") is kept in contact on the circumference of the stretching elements (6') at the sector angle ($\theta$) of 30 to 180 degrees, while the binding net is moving over the stretching elements (6').

4. A method as claimed in any one of the preceding claims, **characterized in that** the weft threads (200') of the binding net (2', 2") are stretched using a knitting apparatus, separate from a knitting beam system (3') of a knitting machine in the knitting apparatus, by means of which the binding net is made, and **in that** the winding of the binding net into a binding net roll (1') is carried out on a winding unit (4') of the knitting apparatus.

5. A method as claimed in claim 4, **characterized in that** the weft threads (200') are stretched using the stretching means (7') arranged in a pulling device (5') of the knitting apparatus.

6. A method as claimed in claim 5, **characterized in that** the weft threads (200') are stretched on the last shaft of the pulling device (5').

**7.** A method as claimed in claim 4, **characterized in that** the weft threads (200') are stretched using the stretching means arranged in an area between the winding unit (4') and the pulling device (5').

**8.** A method as claimed in claim 1 or 4, **characterized in that** the weft threads (200') are stretched plastically as heated to a temperature that exceeds room temperature.

**9.** A method as claimed in claim 1, **characterized in that** the weft threads (200') are stretched 20 % at the most.

**10.** An apparatus for treating a binding net (2', 2") comprising warp threads (201') and weft threads (200'), and a winding unit (4', 4") for winding the binding net into a binding net roll (1', 1"), **characterized by** the apparatus comprising a shaft (7') and rotatable circular elements (6') arranged on the shaft (7'), adjacent to one another in the longitudinal direction of the shaft, and in that the rotatable circular elements are stretching elements (6') having a wavelike or roughened surface, or are wheels made of elastomeric material, and said apparatus comprising stretching means (7', 7") comprising said rotatable circular stretching elements (6', 6").

**11.** An apparatus as claimed in claim 10, **characterized in that** the stretching means (7') form a part of a knitting apparatus for manufacturing the binding net (2'), whereby the stretching means are arranged separate from a knitting beam system (3') of a knitting machine in the knitting apparatus between the knitting beam system and a winding unit (4') of the knitting apparatus.

**12.** A knitting apparatus as claimed in claim 11, **characterized in that** the stretching means (7') are arranged on a pulling device (5').

**13.** A knitting apparatus as claimed in claim 11, **characterized in that** the stretching means (7') are arranged between the pulling device (5') and the winding unit (4').

**14.** A knitting apparatus as claimed in claim 11, **characterized in that** the stretching means (7') form the last shaft of the take up unit (5').

**15.** An apparatus as claimed in claim 10, **characterized in that** the outer circumference of the stretching elements (6') is wave-like and comprises protrusions (60') and recesses (61').

**16.** An apparatus as claimed in claim 15, **characterized in that** the number of protrusions (60') is 10 to 150 for each stretching element (6').

**17.** An apparatus as claimed in claim 15 or 16, **character**i z e d in that the circular elements (6') are discoidal elements, and the cross-section thereof tapers towards the outer circumference and in that the outer circumference thereof is rounded.

**18.** An apparatus as claimed in claim 10, **characterized in that** the stretching elements (6') are arranged along most of the length of the shaft.

**19.** An apparatus as claimed in claim 10, **characterized in that** the number of the stretching elements (6') is 20 to 70.

**20.** An apparatus as claimed in claim 10, **characterized in that** the stretching elements (6') are formed of circumferential parts joined together.

**21.** An apparatus as claimed in claim 10, **characterized in that** the apparatus comprises heating equipment (300') for heating the weft threads.

**22.** A knitted binding net wound into a binding net roll, the binding net comprising warp threads (201') and slack weft threads (200'), **characterized in that** the knitted binding net is made of HD polyethylene and **in that** at least 5% of the weft threads (200') on the roll (1', 1") are slack and in a plastically stretched state, where the plastic elongation is at least 3 %.

**23.** A binding net roll as claimed in claim 22, **characterized in that** at least 50 % of the weft threads (200') are in a plastically stretched state, where the plastic elongation is at least 5 %.

**24.** A binding net roll as claimed in claim 22 or 23, **characterized in that** the warp threads (201') are in a plastically substantially non-stretched state.

**Patentansprüche**

**1.** Verfahren zum Behandeln eines Bindenetzes (2', 2"), das Kettenfäden (201') und Schussfäden (200') umfasst, **dadurch gekennzeichnet, dass** das Bindenetz (2', 2") in Bewegung versetzt und in Kontakt mit rotierenden kreisförmigen Streckelementen (6') eines Streckmittels (7', 7") geführt wird, wobei die Streckelemente auf einer Welle angeordnet sind, angrenzend aneinander in der Längsrichtung der Welle, und wobei die Zahl derselben der Zahl der Kettenfäden (201') des Bindenetzes entspricht, reduziert um mindestens eins, wodurch mindestens ein Kettenfaden (201') in eine Nut (400') geführt wird, die zwischen zwei benachbarten Streckelementen (6') vorgesehen ist, das Bindenetz (2') in Kontakt mit den Umfängen der Streckelemente (6') unter einem Sektorwinkel ($\theta$) von mindestens 20 Grad gehalten wird, während das Bindenetz sich über die Streckelemente (6') bewegt, die Schussfäden (200') des Bindenetzes werden plastisch bei mindestens 3 % unter Verwendung der kreisförmigen Streckelemente (6') dadurch gestreckt, dass das Bindenetz unter Einfluss von Zugspannung gehalten wird, wenn es aus der Bewegungsrichtung des Bindenetzes betrachtet wird, und das Bindenetz (2', 2") wird zu einer Bindenetzrolle (1', 1") gewickelt.

**2.** Verfahren nach Anspruch 1, **dadurch gekennzeichnet, dass** die Zahl von Streckelementen (6') mindestens halb so groß wie die Anzahl der Kettenfäden (201') ist.

**3.** Verfahren nach Anspruch 1, **dadurch gekennzeichnet, dass** das Bindenetz (2', 2") in Kontakt mit dem Umfang der Streckelemente (6') unter dem Sektorwinkel ($\theta$) von 30 bis 180° gehalten wird, während das Bindenetz sich über die Streckelemente (6') bewegt.

**4.** Verfahren nach einem der vorhergehenden Ansprüche, **dadurch gekennzeichnet, dass** die Schussfäden (200') des Bindenetzes (2', 2") gestreckt werden unter Verwendung einer Knüpfvorrichtung, getrennt von einem Knüpfkettbaumsystem (3') einer Knüpfmaschine in der Knüpfvorrichtung, mittels der das Bindenetz hergestellt wird, und dadurch, dass das Wickeln des Bindenetzes zu einer Bindenetzrolle (1') auf einer Wickeleinheit (4') der Knüpfvorrichtung ausgeführt wird.

**5.** Verfahren nach Anspruch 4, **dadurch gekennzeichnet, dass** die Schussfäden (200') unter Verwendung des Streckmittels (7'), das in einer Zugvorrichtung (5') der Knüpfvorrichtung angeordnet ist, gestreckt werden.

**6.** Verfahren nach Anspruch 5, **dadurch gekennzeichnet, dass** die Schussfäden (200') auf der letzten Welle der Zugvorrichtung (5') gestreckt werden.

**7.** Verfahren nach Anspruch 4, **dadurch gekennzeichnet, dass** die Schussfäden (200') unter Verwendung des Streckmittels gestreckt werden, das in einem Bereich zwischen der Wickeleinheit (4') und der Zugvorrichtung (5') angeordnet ist.

**8.** Verfahren nach Anspruch 1 oder 4, **dadurch gekennzeichnet, dass** die Schussfäden (200') plastisch gestreckt werden, wenn sie auf eine Temperatur erwärmt werden, die die Raumtemperatur übersteigt.

**9.** Verfahren nach Anspruch 1, **dadurch gekennzeichnet, dass** die Schussfäden (200') höchstens 20 % gestreckt werden.

**10.** Vorrichtung zum Behandeln eines Bindenetzes (2', 2"), das Kettenfäden (201') und Schussfäden (200') umfasst sowie eine Wickeleinheit (4', 4") zum Wickeln des Bindenetzes zu einer Bindenetzrolle (1', 1"), **gekennzeichnet durch** die Vorrichtung, die eine Welle und drehbare kreisförmige Elemente (6') umfasst, die auf der Welle (7') angeordnet sind, angrenzend aneinander in der Längsrichtung der Welle, und **dadurch**, dass die drehbaren kreisförmige Elemente Streckelemente (6') sind, die eine wellenartige oder aufgeraute Oberfläche haben, oder Wellen sind, die aus einem elastomeren Material hergestellt sind, und wobei die Vorrichtung Streckmittel (7', 7") umfasst, welches die drehbaren kreisförmigen Streckelemente (6', 6") umfassen.

**11.** Vorrichtung nach Anspruch 10, **dadurch gekennzeichnet, dass** das Streckmittel (7') einen Teil einer Knüpfvorrichtung zum Herstellen des Bindenetzes (2') bildet, wobei das Streckmittel getrennt von einem Knüpfkettbaumsystem (3') einer Knüpfmaschine in der Knüpfvorrichtung zwischen dem Knüpfkettbaumsystem und einer Wickeleinheit (4') der Knüpfvorrichtung angeordnet ist.

12. Knüpfvorrichtung nach Anspruch 11, **dadurch gekennzeichnet, dass** das Streckmittel (7') auf einer Zugvorrichtung (5') angeordnet ist.

13. Knüpfvorrichtung nach Anspruch 11, **dadurch gekennzeichnet, dass** das Streckmittel (7') zwischen der Zugvorrichtung (5') und der Wickeleinheit (4') angeordnet ist.

14. Knüpfvorrichtung nach Anspruch 11, **dadurch gekennzeichnet, dass** das Streckmittel (7') die letzte Welle der Aufnahmeeinheit (5') bildet.

15. Vorrichtung nach Anspruch 10, **dadurch gekennzeichnet, dass** der äußere Umfang der Streckelemente (6') wellenartig ist und Vorsprünge (60') und Vertiefungen (61') umfasst.

16. Vorrichtung nach Anspruch 15, **dadurch gekennzeichnet, dass** die Zahl der Vorsprünge (60') 10 bis 150 für jedes Streckelement (6') beträgt.

17. Vorrichtung nach Anspruch 15 oder 16, **dadurch gekennzeichnet, dass** die kreisförmigen Elemente (6') diskusförmige Elemente sind und der Querschnitt derselben sich zum äußeren Umfang hin verjüngt, und dadurch, dass der äußere Umfang derselben abgerundet ist.

18. Vorrichtung nach Anspruch 10, **dadurch gekennzeichnet, dass** die Streckelemente (6') über den größten Teil der Länge der Welle angeordnet sind.

19. Vorrichtung nach Anspruch 10, **dadurch gekennzeichnet, dass** die Zahl der Streckelemente (6') 20 bis 70 beträgt.

20. Vorrichtung nach Anspruch 10, **dadurch gekennzeichnet, dass** die Streckelemente (6') aus Umfangsteilen gebildet sind, die miteinander verbunden sind.

21. Vorrichtung nach Anspruch 10, **dadurch gekennzeichnet, dass** die Vorrichtung eine Heizeinrichtung (300') zum Erwärmen der Schussfäden umfasst.

22. Geknüpftes Bindenetz, das zu einer Bindenetzrolle gewickelt ist, wobei das Bindenetz Kettenfäden (201') und lose Schussfäden (200') umfasst, **dadurch gekennzeichnet, dass** das geknüpfte Bindenetz aus HD-Polyethylen hergestellt ist, und dadurch, dass mindestens 5 % der Schussfäden (200') auf der Rolle (1', 1") lose sind und sich in einem plastisch gestreckten Zustand befinden, wobei die plastische Elongation mindestens 3 % beträgt.

23. Bindenetzrolle nach Anspruch 22, **dadurch gekennzeichnet, dass** mindestens 50 % der Schussfäden (200') sich in einem plastisch gestreckten Zustand befinden, wobei die plastische Elongation mindestens 5 % beträgt.

24. Bindenetzrolle nach Anspruch 22 oder 23, **dadurch gekennzeichnet, dass** die Kettenfäden (201') sich in einem plastischen, im Wesentlichen nichtgestreckten Zustand befinden.

**Revendications**

1. Procédé de fabrication d'un filet d'emballage (2', 2") comprenant des fils de chaîne (201') et des fils de trame (200'), **caractérisé en ce que** le filet d'emballage (2', 2") est mis en mouvement et guidé de manière à être en contact avec des éléments d'étirage rotatifs circulaires (6') d'un dispositif d'étirage (7', 7"), les éléments d'étirage étant disposés sur un arbre, les uns à côté des autres dans la direction longitudinale de l'arbre, et leur nombre correspondant au nombre de fils de chaîne (201') du filet d'emballage réduit d'au moins un, dans lequel au moins un fil de chaîne (201') est guidé dans une gorge (400') disposée entre deux éléments d'étirage adjacents (6'), le filet d'emballage (2') est maintenu en contact avec la périphérie des éléments d'étirage (6') selon un angle de secteur (θ) d'au moins 20 degrés pendant son déplacement sur les éléments d'étirage (6'), les fils de trame (200') du filet d'emballage sont étirés plastiquement d'au moins 3 % au moyen des éléments d'étirage circulaires (6') en maintenant le filet d'emballage sous l'influence d'une résistance à la traction vue dans le sens de déplacement du filet d'emballage, et le filet d'emballage (2', 2") est embobiné en un rouleau de filet d'emballage (1', 1").

**2.** Procédé selon la revendication 1, **caractérisé en ce que** le nombre d'éléments d'étirage (6') est au moins la moitié du nombre de fils de chaîne (201').

**3.** Procédé selon la revendication 1, **caractérisé en ce que** le filet d'emballage (2', 2") est maintenu en contact sur la périphérie des éléments d'étirage (6') selon l'angle de secteur (θ) compris entre 30 et 180 degrés pendant son déplacement sur les éléments d'étirage (6').

**4.** Procédé selon l'une quelconque des revendications précédentes, **caractérisé en ce que** les fils de trame (200') du filet d'emballage (2', 2") sont étirés à l'aide d'un dispositif de tricotage, séparé d'un système de rouleau de tricotage (3') d'un métier à tricoter dans le dispositif de tricotage, ce qui permet de fabriquer le filet d'emballage, et **en ce que** le bobinage du filet d'emballage en un rouleau de filet d'emballage (1') est effectué sur une unité de bobinage (4') du dispositif de tricotage.

**5.** Procédé selon la revendication 4, **caractérisé en ce que** les fils de trame (200') sont étirés à l'aide du dispositif d'étirage (7') disposé dans un dispositif de tirage (5') du dispositif de tricotage.

**6.** Procédé selon la revendication 5, **caractérisé en ce que** les fils de trame (200') sont étirés sur le dernier arbre du dispositif de tirage (5').

**7.** Procédé selon la revendication 4, **caractérisé en ce que** les fils de trame (200') sont étirés à l'aide du dispositif d'étirage disposé entre l'unité de bobinage (4') et le dispositif de tirage (5').

**8.** Procédé selon la revendication 1 ou 4, **caractérisé en ce que** les fils de trame (200') sont étirés plastiquement en étant chauffés à une température supérieure à la température ambiante.

**9.** Procédé selon la revendication 1, **caractérisé en ce que** les fils de trame (200') sont étirés de 20 % au maximum.

**10.** Dispositif de fabrication d'un filet d'emballage (2', 2") comprenant des fils de chaîne (201') et des fils de trame (200'), et une unité de bobinage (4', 4") permettant d'embobiner le filet d'emballage en un rouleau de filet d'emballage (1', 1"), **caractérisé en ce que** le dispositif comprend un arbre (7') et des éléments rotatifs circulaires (6') disposés sur l'arbre (7') les uns à côté des autres dans la direction longitudinale de l'arbre, et **en ce que** les éléments rotatifs circulaires sont des éléments d'étirage (6') ayant une surface ondulée ou rugueuse, ou sont des roues en matériau élastomère, et ledit dispositif comporte un dispositif d'étirage (7', 7") comprenant lesdits éléments d'étirage rotatifs circulaires (6', 6").

**11.** Dispositif selon la revendication 10, **caractérisé en ce que** le dispositif d'étirage (7') fait partie d'un dispositif de tricotage servant à fabriquer le filet d'emballage (2'), le dispositif d'étirage étant disposé séparément d'un système de rouleau de tricotage (3') d'un métier à tricoter dans le dispositif de tricotage, entre le système de rouleau de tricotage et une unité de bobinage (4') du dispositif de tricotage.

**12.** Dispositif de tricotage selon la revendication 11, **caractérisé en ce que** le dispositif d'étirage (7') est disposé sur un dispositif de tirage (5').

**13.** Dispositif de tricotage selon la revendication 11, **caractérisé en ce que** le dispositif d'étirage (7') est disposé entre le dispositif de tirage (5') et l'unité de bobinage (4').

**14.** Dispositif de tricotage selon la revendication 11, **caractérisé en ce que** le dispositif d'étirage (7') forme le dernier arbre de l'unité d'enroulement (5').

**15.** Dispositif selon la revendication 10, **caractérisé en ce que** la périphérie extérieure des éléments d'étirage (6') est ondulée et comporte des saillies (60') et des renfoncements (61').

**16.** Dispositif selon la revendication 15, **caractérisé en ce que** le nombre de saillies (60') est compris entre 10 et 150 pour chaque élément d'étirage (6').

**17.** Dispositif selon la revendication 15 ou 16, **caractérisé en ce que** les éléments circulaires (6') sont des éléments discoïdaux, et leur section transversale s'effile en direction de la périphérie extérieure, et **en ce que** leur périphérie extérieure est arrondie.

**18.** Dispositif selon la revendication 10, **caractérisé en ce que** les éléments d'étirage (6') sont disposés sur la majeure partie de la longueur de l'arbre.

**19.** Dispositif selon la revendication 10, **caractérisé en ce que** le nombre d'éléments d'étirage (6') est compris entre 20 et 70.

**20.** Dispositif selon la revendication 10, **caractérisé en ce que** les éléments d'étirage (6') sont formés de pièces périphériques jointes les unes aux autres.

**21.** Dispositif selon la revendication 10, **caractérisé en ce que** le dispositif comprend un équipement de chauffage (300') permettant de chauffer les fils de trame.

**22.** Filet d'emballage tricoté et embobiné en un rouleau de filet d'emballage, le filet d'emballage comprenant des fils de chaîne (201') et des fils de trame (200') lâches, **caractérisé en ce que** le filet d'emballage tricoté est en polyéthylène HD, et **en ce qu'**au moins 5 % des fils de trame (200') sur le rouleau (1', 1") sont lâches et dans un état plastiquement étiré, l'allongement plastique étant d'au moins 3 %.

**23.** Rouleau de filet d'emballage selon la revendication 22, **caractérisé en ce qu'**au moins 50 % des fils de trame (200') sont dans un état plastiquement étiré, l'allongement plastique étant d'au moins 5 %.

**24.** Rouleau de filet d'emballage selon la revendication 22 ou 23, **caractérisé en ce que** les fils de chaîne (201') ne sont essentiellement pas dans un état plastiquement étiré.

FIG. 1

FIG. 2

FIG. 3

FIG. 4

200
201

X
k₁

FIG. 5

200
201

D/20

X-k₁

200'
201'

X

FIG. 6

200'
201'

X = X-(k₁-f)

FIG. 7

FIG.8

FIG. 9

FIG. 10

FIG. 11

FIG.12

**EP 1 751 336 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0919655 B1
- WO 2005083167 A1